# EUROPÄISCHE PATENTANMELDUNG

(11) **EP 2 413 086 A2**
(43) Veröffentlichungstag der Anmeldung: **01.02.2012**
(21) Anmeldenummer: 11005844.3
(22) Anmeldetag: 16.07.2011
(51) Int. Cl.: F41G 7/20

(54) **Verfahren zum Steuern eines durch ein Triebwerk angetriebenen Lenkflugkörpers**

(30) Priorität: 26.07.2010 DE 102010032281
(71) Anmelder: Diehl BGT Defence GmbH & Co.KG, 88662 Überlingen (DE)
(72) Erfinder: Kuhn, Thomas, Dr., 88633 Heiligenberg (DE)
(74) Vertreter: Diehl Patentabteilung

(57) **Zusammenfassung**

Die Erfindung geht aus von einem Verfahren zum Steuern eines durch ein Triebwerk angetriebenen Lenkflugkörpers (2), bei dem ein Prozessmittel (24) des Lenkflugkörpers (2) während des Flugs eine Flugbahneigenschaft einer Flugbahn (4) zu einem Zielpunkt (8) berechnet und den Flug des Lenkflugkörpers (2) in Abhängigkeit von der Flugbahneigenschaft steuert.

Um eine gute Kompensation eines Fluchtmanövers eines Ziels (12) des Lenkflugkörpers (2) zu erreichen, wird vorgeschlagen, dass bei der Berechnung der Flugbahneigenschaft die Fluggeschwindigkeit des Lenkflugkörpers (2) beeinflussende und durch das Prozessmittel (24) gesteuerte lenkfreie Flugprozesse berücksichtigt werden.

## Beschreibung

Die Erfindung betrifft ein Verfahren zum Steuern eines durch ein Triebwerk angetriebenen Lenkflugkörpers, bei dem ein Prozessmittel des Lenkflugkörpers während des Flugs eine Flugbahneigenschaft zu einem Zielpunkt berechnet und den Flug des Lenkflugkörpers in Abhängigkeit von der Flugbahneigenschaft steuert.

Bekannte Flugkörper zur Bekämpfung mobiler Ziele verwenden in der Endphasenlenkung üblicherweise ein aus der Proportionalnavigation abgeleitetes Verfahren. Das Ziel der Proportionalnavigation besteht darin, den Flugkörper auf Kollisionskurs zum Ziel zu bringen. Der Flugkörper wird von der Proportionalnavigation auf Kollisionskurs gelenkt, indem die inertiale Sichtliniendrehrate des vom Suchkopf anvisierten Ziels durch eine entsprechende Lenkung des Flugkörpers proportional zu Null geregelt wird. Die Präzision dieser Verfahren ist für den Zustand der unbeschleunigten Bewegung von Ziel und Flugkörper optimal, die Ablage wird in diesem Fall theoretisch zu Null. In der praktischen Anwendung ist dieser Idealzustand nicht gegeben. Die Treffgenauigkeit ist jedoch oftmals ausreichend, wenn die Manöverüberlegenheit des Flugkörpers gegenüber dem Ziel statisch wie dynamisch gegeben ist. Damit können die a priori unbekannten Zielmanöver in gewissem Rahmen kompensiert werden. Wird dieser Rahmen verlassen, wenn beispielsweise ein Fluchtmanöver des Ziels den Flugkörper überfordert, so verfehlt der Flugkörper sein Ziel.

Es ist eine Aufgabe der vorliegenden Erfindung, ein Verfahren zum Steuern eines Lenkflugkörpers anzugeben, das die Möglichkeit einer guten Kompensation eines Fluchtmanövers eines Ziels des Lenkflugkörpers bietet.

Diese Aufgabe wird durch das Verfahren der eingangs genannten Art gelöst, bei dem erfindungsgemäß bei der Berechnung der Flugbahneigenschaft die Fluggeschwindigkeit des Lenkflugkörpers beeinflussende und durch das Prozessmittel gesteuerte lenkfreie Flugprozesse berücksichtigt werden.

Die Erfindung geht von der Überlegung aus, dass ein flüchtendes Ziel stets zu einer Zielablage führt, also einem Auswandern des Ziels aus dem Kollisionskurs. Die Größe der Zielablage hängt statisch von dem Verhältnis der Querbeschleunigungsfähigkeit des Lenkflugkörpers zur Zielbeschleunigung, also der statischen Manöverüberlegenheit ab. Um ein Ziel mit Proportionalnavigation zu treffen, muss eine ausreichende statische Manöverüberlegenheit gegeben sein, üblicherweise mindestens ein Faktor 3. Der Lenkkreis des Lenkflugkörpers wird bei Zielannäherung zunehmend instabil. Der Abstand zum Ziel, bei dem die Lenkschleife instabil wird, hängt von der Bandbreite des geregelten Lenkflugkörpers ab und auch von der gewählten Lenkverstärkung, wobei gilt, je größer die Lenkverstärkung, desto weiter vor dem Ziel wird die Lenkschleife instabil bzw. je größer die Bandbreite des geregelten Flugkörpers ist, desto dichter vor dem Ziel wird die Lenkschleife instabil. Um ein manövrierendes Ziel mit Proportionalnavigation zu treffen, muss gewährleistet sein, dass nach dem Eintreten der Instabilität dem Ziel kein erfolgreiches Fluchtmanöver mehr gelingen kann, d. h. eine dynamische Manöverüberlegenheit des Flugkörpers gegeben ist.

Auch bei hoher Manöverüberlegenheit wirkt sich eine unvorhergesehene positive oder negative Beschleunigung des Lenkflugkörpers in der Nähe des Ziels negativ auf die Wahrscheinlichkeit aus, ob der Lenkflugkörper das flüchtende Ziel treffen wird. Denn eine unvorhergesehene Beschleunigung des . Lenkflugkörpers führt zu einer zusätzlichen Zielablage, die durch Lenkmanöver zu kompensieren ist. Es ist daher vorteilhaft, eine Längsbeschleunigung, also eine negative Beschleunigung bzw: ein Abbremsen oder eine positive Beschleunigung des Lenkflugkörpers in Axialrichtung möglichst frühzeitig in die Berechnung der Lenkmanöver einzubeziehen.

Wird eine Längsbeschleunigung des Lenkflugkörpers vom Prozessmittel gesteuert oder zumindest beeinflusst, so können die Fluggeschwindigkeit des Lenkflugkörpers beeinflussende und durch das Prozessmittel gesteuerte lenkfreie Flugprozesse, insbesondere zukünftige Flugprozesse, bei der Ermittlung der Lenkungssteuerungsbefehle berücksichtigt werden, sodass die mit der Längsbeschleunigung eintretende Zielablage bereits vorab vorkompensiert wird. Hierdurch ist die Zielablage in der Nähe des Ziels kleiner und die Wahrscheinlichkeit, das Ziel zu treffen, höher. Die berücksichtigten Flugprozesse liegen zweckmäßigerweise in der Zukunft, also finden erst nach Ihrer Berücksichtigung bei der Berechnung der Flugbahneigenschaft statt. Zwischen der Berücksichtigung der Flugprozesse und ihrer tatsächlichen Steuerung liegen zweckmäßigerweise mehrere Sekunden.

Der Lenkflugkörper ist zweckmäßigerweise eine Rakete, wie eine Boden-BodenRakete oder eine Boden-Luft-Rakete. Vorteilhafterweise wird der Fehlpunkt unter der Annahme vorgegebener Lenkbewegungen, insbesondere keiner Lenkbewegungen, bis zum Erreichen des Fehlpunkts berechnet. Ist ein der Berechnung zugrunde gelegter Flug lenkfrei, so wird also vom zum Zeitpunkt der Rechnung momentanen Standort bis zum Fehlpunkt von einem ungelenkten Flug ausgegangen. Der Zielpunkt kann ein berechneter Kollisionspunkt sein, beispielsweise ein Punkt, an dem sich zwei Raketen, also das Ziel und der Lenkflugkörper, treffen. Lenkfrei ist in diesem Zusammenhang jeder Prozess, der keine gesteuerte Lenkung des Lenkflugkörpers beinhaltet. Durch das Prozessmittel gesteuerte lenkfreie Flugprozesse sind solche Prozesse, bei denen die Flugrichtung nicht aktiv durch Lenkmanöver verändert wird, wie beispielsweise das Verändern des Schubs des Triebwerks, das Abwerfen einer Schutzhaube vor dem Dom oder das Zünden einer zweiten Triebwerksstufe. Der Fehlpunkt kann in absoluten Raumkoordinaten berechnet werden, beispielsweise in geozentrischen Koordinaten. Ebenso ist es möglich, den Fehlpunkt in Abhängigkeit vom Zielpunkt zu berechnen, beispielsweise in einem Koordinatensystem, das den Zielpunkt zum Ursprung hat. So kann zum Beispiel der Fehlpunkt in auf den Zielpunkt angegebenen Radialkoordinaten berechnet werden.

Ein Einbeziehen von zukünftigen oder gegenwärtigen durch das Prozessmittel gesteuerten Flugprozessen in die Flugsteuerung auf der Grundlage der Proportionalnavigation ist zwar möglich, jedoch komplex. Ein solches Einbeziehen ist einfacher, wenn das Prozessmittel anstelle der Proportionalnavigation eine Fehlpunktnavigation verwendet, insbesondere ein Verfahren, das Zero Effort Miss (ZEM)-Navigation genannt wird. Die Fehlpunktnavigation, die bisher nur für ballistische Raketen Anwendung findet, also Raketen ohne Antrieb, bei denen keine durch das Prozessmittel gesteuerte lenkfreie Flugprozesse einbezogen werden, berechnet den Fehlpunkt des Lenkflugkörpers. Der Fehlpunkt des Lenkflugkörpers ist der Punkt, an dem die vorausberechnete Flugbahn des Lenkflugkörpers den geringsten Abstand zum bekannten Zielpunkt hat. Der Zielpunkt kann a priori bekannt sein oder durch Rechnung während des Flugs ermittelt werden und somit ebenfalls bekannt sein kann. Liegt der Fehlpunkt weiter als vorgesehen vom Zielpunkt entfernt, wird der Lenkflugkörper unter Berücksichtigung der Richtung und Entfernung des Fehlpunkts zum Zielpunkt gelenkt und somit auf eine neue Flugbahn gesteuert. Da anhand dieses Verfahrens die Flugbahn stetig im Voraus berechnet wird, ist ein Einbeziehen eines durch das Prozessmittel gesteuerten lenkfreien Flugprozesses in die Berechnung der Flugbahn mit relativ geringer Rechenkapazität möglich. Eine Eigenbeschleunigung des Lenkflugkörpers in Längs- bzw. Axialrichtung kann frühzeitig in die Lenkungssteuerung einbezogen werden, sodass der Lenkungsaufwand in der Nähe des Ziels verringert wird.

In einer vorteilhaften Ausführungsform der Erfindung wird der Lenkflugkörper in der Endphase des Flugs mittels Fehlpunktnavigation in das Ziel gesteuert. Hierzu kann das Prozessmittel als Flugbahneigenschaft einen Fehlpunkt berechnen, an dem die Flugbahn den geringsten Abstand zu einem bekannten Zielpunkt hat, und den Flug des Lenkflugkörpers in Abhängigkeit von der Lage des Fehlpunkts relativ zum Zielpunkt steuern.

Vorteilhafterweise wird als Flugprozess ein vom Prozessmittel einstellbares Schubprofil des Triebwerks des Lenkflugkörpers berücksichtigt. So kann beispielsweise eine starke Beschleunigung des Lenkflugkörpers kurz vor Zielerreichung - um eine hohe Manöverüberlegenheit zu erreichen - schon vorab berücksichtigt werden, sodass die spätere höhere Geschwindigkeit des Lenkflugkörpers kurz vor Erreichen des Ziels bereits vorab bei der Berechnung der Flugbahn und des Zielpunkts berücksichtigt werden kann.

Zum Erreichen einer hohen Manöverüberlegenheit weisen manche Raketen ein Triebwerk auf, das eine kurz und stark brennende zweite Stufe enthält zur starken Endbeschleunigung des Lenkflugkörpers im Endanflug, der beispielsweise bis zu drei Sekunden vor dem Erreichen des Zielpunkt beginnen kann. Die Lage des Zielpunkts eines sich bewegenden Ziels ist abhängig von dem Zündzeitpunkt der zweiten Triebwerkstufe, da der Zielpunkt umso schneller erreicht wird, je schneller der Lenkflugkörper fliegt und das Ziel daher umso weniger weit fliegt, je schneller der Lenkflugkörper fliegt. Daher ist es vorteilhaft, wenn der Zündzeitpunkt der zweiten Triebwerkstufe vor Erreichen des Endanflugs berücksichtigt wird.

Eine weitere vorteilhafte Ausführungsform der Erfindung sieht vor, dass der Lenkflugkörper ein Triebwerk aufweist, dessen Schubprofil über einen Zeitraum einstellbar ist, insbesondere kontinuierlich einstellbar ist, und dass zumindest eine Variable des Schubprofils in die Berechnung des Fehlpunkts und/oder des Zielpunkts eingeht. Die Variable des Schubprofils kann eine zeitkontinuierliche Variable sein, beispielsweise der Schub in Abhängigkeit von der Zeit bzw. die vom Schub bewirkte Längsbeschleunigung des Lenkflugkörpers in Abhängigkeit von der Zeit.

Der Abwurf eines Gegenstandes vom Lenkflugkörper, beispielsweise einer Schutzkappe vor einem Suchkopfdom oder ein ausgebranntes Triebwerkselement, beeinflusst die Geschwindigkeit des Lenkflugkörpers. Daher ist es vorteilhaft, wenn ein Abwurf eines Gegenstands vom Lenkflugkörper als Flugprozess vom Prozessmittel berücksichtigt wird.

Bei einem Vorhandensein eines im Schubprofil steuerbaren Triebwerks ist es - auch unabhängig von der oben beschriebenen Erfindung - vorteilhaft, wenn ein Längsbeschleunigungsprofil für den Flug des Lenkflugkörpers nach vorbestimmten Kriterien berechnet wird, so dass ein Zielkriterium in einer vorgegebenen Weise erfüllt wird, und das Triebwerk zweckmäßigerweise entsprechend des Längsbeschleunigungsprofils angesteuert wird. Dieses Verfahren zum Steuern eines durch ein Triebwerk angetriebenen Lenkflugkörpers sieht also vor, dass das Schubprofil des Triebwerks in Abhängigkeit vom Zielkriterium gesteuert wird. Dieses Verfahren ist sowohl mit dem erfindungsgemäßen Verfahren als auch mit allen oben und im Weiteren beschriebenen Details des erfindungsgemäßen Verfahrens alleine kombinierbar.

Mit diesem neuen Verfahren ist es beispielsweise möglich und vorteilhaft, einen Abstand zwischen dem Fehlpunkt und dem Zielpunkt auch ohne eine Lenkungssteuerung, also eine Richtungssteuerung des Lenkflugkörpers, und alleine durch eine Veränderung des Längsbeschleunigungsprofils zu erreichen. Durch die Steuerung des Flugs des Lenkflugkörpers auf dem berechneten Längsbeschleunigungsprofil, also so, dass der Lenkflugkörper die Beschleunigung des Längsbeschleunigungsprofils in Abhängigkeit von der Zeit erfährt, können Lenkbewegungen überflüssig gemacht werden. Bei der Ansteuerung des Zielpunkts kann also neben der Variablen der Lenkung, worunter eine Leitwerkslenkung zu verstehen ist, also eine Richtungsveränderung des Lenkflugkörpers, die Variable der positiven oder negativen Längsbeschleunigung verwendet werden. Beide Variablen können unabhängig oder abhängig voneinander berechnet und zur Steuerung verwendet werden. Ist es möglich, bereits durch eine Längsbeschleunigung in der Endphase des Flugs eine Lenkung zu ersetzen, kann die Manöverfähigkeit des Lenkflugkörpers gesteigert werden.

Das Zielkriterium kann ein Abstand zwischen dem Fehlpunkt und dem Zielpunkt sein. Ein weiteres oder alternatives Zielkriterium kann ein Angriffswinkel des Lenkflugkörpers im Zielpunkt sein. So ist - in Abhängigkeit von der Art des Ziels und dessen Bewegung - in der Regel ein bestimmter Angriffswinkel vorteilhaft, also ein Winkel, unter dem der Lenkflugkörper auf das Ziel trifft, wobei der Winkel bezogen auf die Bewegungsrichtung des Ziels und des Lenkflugkörpers angegeben sein kann. Es ist vorteilhaft, wenn der Angriffswinkel zumindest eine vorbestimmte Zeitdauer vor Erreichen des Zielpunkts eingestellt ist. Hierdurch entfällt kurz vor Erreichen des Ziels eine Lenkung, die nur die Einstellung des Angriffswinkels zum Ziel hat. Die Lenkung kann somit ganz in die Aufgabe der Kompensation von Fluchtbewegungen des Ziels gestellt werden.

Ein weiteres vorteilhaftes Zielkriterium ist ein Zeitpunkt, zu dem der Lenkflugkörper das Ziel erreicht. Zwar ist es allgemein vorteilhaft, das Ziel möglichst früh zu erreichen. Jedoch ist insbesondere bei der Bekämpfung von mehreren Zielen durch mehrere Lenkflugkörper ein vorzeitiger Treffer des einen Ziels in der Nähe des anderen Ziels nachteilig, da eine Explosionswolke des ersten Ziels das andere Ziel verdecken kann und der zweite Lenkflugkörper somit sein Ziel schwerer verfolgen kann.

Ist der Zielzeitpunkt - insbesondere durch die Einstellung des Längsbeschleunigungsprofils - innerhalb von gewissen Grenzen einstellbar, so kann bei der Ansteuerung mehrerer Ziele durch mehrere Lenkflugkörper der Zielzeitpunkt eines Lenkflugkörpers so eingestellt werden, dass er innerhalb eines vorgegebenen Zeitbereichs liegt, und insbesondere mit dem Zielzeitpunkt eines zweiten Lenkflugkörpers zusammen fällt. Die beiden Ziele werden zeitlich weitgehend gleichzeitig erreicht, sodass eine Abdeckung des einen Ziels durch die Explosion des anderen Ziels vermieden wird. Allgemein formüliert ist der Zielzeitpunkt zweckmäßigerweise abhängig von einem Zielzeitpunkt, zu dem ein benachbart fliegender Lenkflugkörper seinen Zielpunkt erreicht. Hierbei ist es vorteilhaft, wenn die beiden Lenkflugkörper ihre Zielzeitpunkte austauschen.

Die Erfindung ist außerdem gerichtet auf einen Lenkflugkörper mit einem Triebwerk und einem Prozessmittel, das zum Steuern eines Flugs des Lenkflugkörpers in der Weise vorbereitet ist, dass das Prozessmittel während des Flugs eine Flugbahneigenschaft zu einem Zielpunkt berechnet und den Flug des Lenkflugkörpers in Abhängigkeit von der Flugbahneigenschaft steuert.

Es wird vorgeschlagen, dass das Prozessmittel erfindungsgemäß dazu vorbereitet ist, bei der Berechnung der Flugbahneigenschaft die Fluggeschwindigkeit des Lenkflugkörpers beeinflussende und durch das Prozessmittel gesteuerte lenkfreie Flugprozesse zu berücksichtigen.

Die beschriebene Vorbereitung des Steuermittels kann durch ein entsprechendes Steuerprogramm des Steuermittels vorliegen, dessen Ablauf - beispielsweise in Verbindung mit geeigneten Eingangssignalen, wie Sensorsignalen - eine entsprechende Berechnung und/oder Steuerung bewirkt. Hierzu umfasst das Steuermittel zweckmäßigerweise elektronische Elemente, wie einen Prozessor und Datenspeicher, die zum Ablaufen des Steuerprogramms notwendig sind.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: einen von einem Bodenwerfer abgeschossenen Lenkflugkörper auf einer Flugbahn zu einem Ziel,
- Fig. 2: den Lenkflugkörper aus Fig. 1 in einer schematischen Darstellung,
- Fig. 3: einen Endanflug des Lenkflugkörper auf einen Zielpunkt,
- Fig.4: eine Verschiebung des Zielpunkts aufgrund einer überraschenden Beschleunigung des Lenkflugkörpers,
- Fig. 5: den Lenkflugkörper aus Fig. 1 auf einer anderen Flugbahn und
- Fig. 6: drei Lenkflugkörper im Anflug auf drei Ziele.

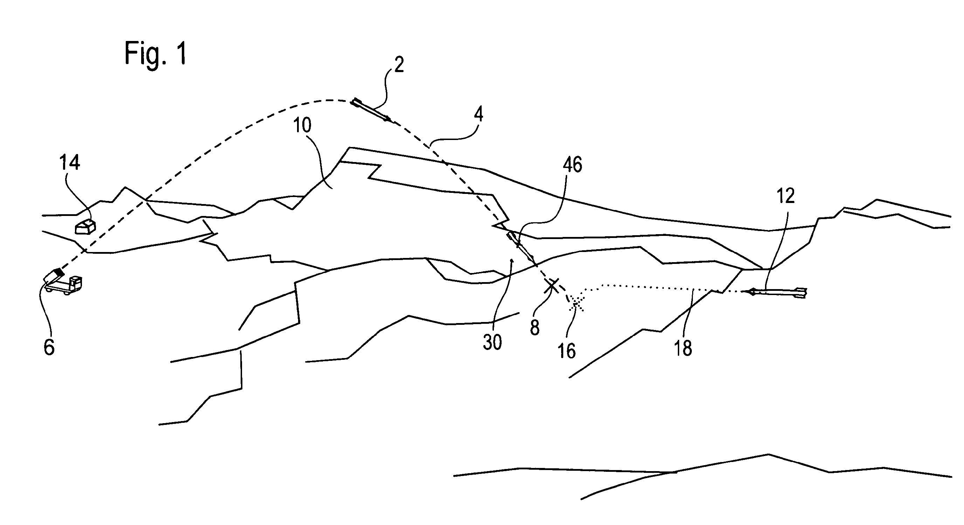

Fig. 1 zeigt einen Lenkflugkörper 2, der als Boden-Luft-Abwehrrakete ausgeführt ist auf einer Flugbahn 4, die von einem Startgerät 6 zu einem voraussichtlichen Zielpunkt 8 durch eine Landschaft 10 geführt ist. Das Startgerät 6 ist ein LKW mit einer Starteinrichtung für eine Vielzahl von Boden-Luft-Abwehrraketen, wobei es ebenso gut denkbar ist, den Lenkflugkörper 2 von einem Schiff aus zu starten. Der Zielpunkt 8 ist derjenige Ort im Raum, an dem der Lenkflugkörper 2 voraussichtlich sein Ziel 12 trifft, das in dem gezeigten Ausführungsbeispiel eine Rakete ist, die durch den ebenfalls als Rakete ausgeführten Lenkflugkörper 2 bekämpft werden soll.

Der voraussichtliche Zielpunkt 8 errechnet sich aus der Bewegung des Ziels 12, dem Startzeitpunkt des Lenkflugkörpers 2 vom Startgerät 6 und der voraussichtlichen Flugdauer des Lenkflugkörpers 2 bis zum voraussichtlichen Zielpunkt 8. Diese Daten können von einer Feuerleitstelle 14 oder vom Startgerät 6 berechnet werden. Anschließend wird der voraussichtliche Zielpunkt 8 dem Lenkflugkörper 2 mitgeteilt und der Lenkflugkörper 2 wird gestartet, wobei auch eine umgekehrte Reihenfolge denkbar ist. Der voraussichtliche Zielpunkt 8 ist ein berechneter Punkt, der mit dem späteren tatsächlichen Aufschlagpunkt 16, an dem der Lenkflugkörper 2 das Ziel 12 tatsächlich trifft, in der Regel nicht identisch ist. Dies kann an einer Abweichung des tatsächlichen Flugverhalten des Lenkflugkörpers 2 von der voraus berechneten Flugbahn 4 und vor allem durch Fluchtmanöver des Ziels 12 liegen, die das Ziel 12 bei Erkennen des Lenkflugkörpers 2 durchführen kann. Ein solches Fluchtmanöver ist am linken Ende der gepunktet gezeichneten Flugbahn 18 des Ziels 12 angedeutet, dem der Lenkflugkörper 2 folgt, wie durch das rechte Ende der gestrichelt dargestellten Flugbahn 4 angedeutet ist.

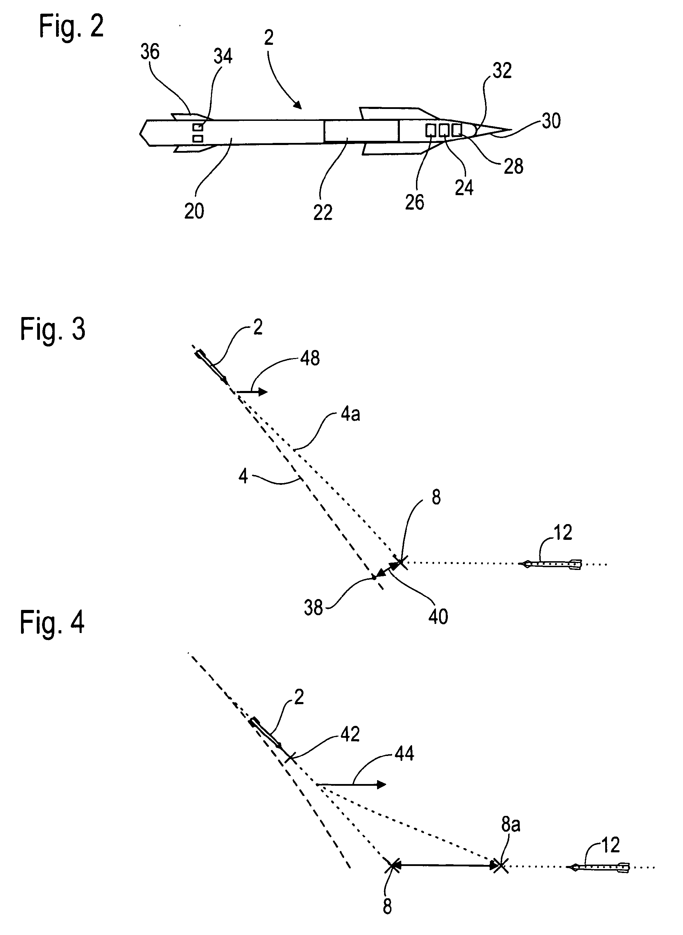

Fig. 2 zeigt den Lenkflugkörper 2 in einer vergrößerten und schematischen Darstellung. Der Lenkflugkörper 2 umfasst ein Triebwerk 20, eine Wirkladung 22, ein Prozessmittel 24 mit einem Datenspeicher 26 für Flugbahndaten, einen Suchkopf 28 und eine Haube 30, die einen transparenten Dom 32 während des Anflugs auf das Ziel 12 schützt. Mit Hilfe von schematisch angedeuteten Aktuatoren 34 zur Bewegung von Leitflügeln 36 kann das Prozessmittel 24 den Flug des Lenkflugkörpers 2 steuern.

Anhand der weiteren Figuren wird im Folgenden erläutert, wie das Prozessmittel 24 den Flug des Lenkflugkörpers 2 steuert. Fig. 3 zeigt den Lenkflugkörper 2 auf seiner Flugbahn 4 auf dem Weg zum voraussichtlichen Zielpunkt 8. Hierzu berechnet das Prozessmittel 24 die Lage eines Fehlpunkts 38, an den die berechnete Flugbahn 4 den geringsten Abstand 40 zu dem voraussichtlichen Zielpunkt 8 hat. Als Randbedingung zur Berechnung der Flugbahn 4 wird der Weiterflug des Flugkörpers 2 zum Berechnungszeitpunkt ohne Lenkmanöver vorgegeben. Die Flugbahn 4 ist somit die Flugbahn des ungelenkten Weiterflugs des Lenkflugkörpers 2, die im Zielpunkt 8 endet bzw. im Fehlpunkt 38 am Zielpunkt 8 vorbeiführt. Die Flugbahn 4 kann eine ballistische Flugbahn 4 sein oder eine Flugbahn 4 eines zwar angetriebenen aber ohne Lenkbewegungen in Geradeausrichtung weiterfliegenden Lenkflugkörpers 2. Aus der Richtung und der Länge des Abstands 40 berechnet das Prozessmittel 24 nun die Lenkkommandos, die die Flugbahn 4 in eine solche Flugbahn 4a überführen, die - nach Abschluss der Lenkbewegung des Lenkflugkörpers 2 von der Flugbahn 4 auf die Flugbahn 4a - in einem ungelenkten Weiterflug in den Zielpunkt 8 führt, wie in Fig. 3 anhand der eng gestrichelten Flugbahn 4a dargestellt ist. Auf diese Weise kann vorausschauend und mit minimalem Lenkaufwand eine Lenkung eines Lenkflugkörpers 2 in den Zielpunkt 8 erreicht werden.

Bei der Berechnung der Flugbahneigenschaft der Flugbahn 4 bzw. 4a, also in diesem Ausführungsbeispiel dem Abstand 40 des Fehlpunkts 38 vom Zielpunkt 8, werden Randbedingungen berücksichtigt. Solche Randbedingungen sind beispielsweise die Gravitation, die auf den Flug des Lenkflugkörpers 2 wirkt, und der Luftwiderstand des Lenkflugkörpers 2 auf seinem Flug durch die Atmosphäre.

Um eine hohe Manöverfähigkeit des Lenkflugkörpers 2 im Endanflug auf den Zielpunkt 8 zu erreichen, ist es vorteilhaft, wenn der Lenkflugkörper 2 mit einer möglichst hohen Endgeschwindigkeit auf den Zielpunkt 8 zufliegt. Hierzu umfasst das Triebwerk 20 des Lenkflugkörpers 2 eine zweite Stufe, die etwa 3 Sekunden vor dem berechneten Zielzeitpunkt, zu dem der Flugkörper 2 den Zielpunkt 8 erreicht, gezündet wird. In Fig. 4 ist der Zündpunkt 42, an dem die zweite Triebwerksstufe zündet, als Raumpunkt eingezeichnet. Nach Erreichen dieses Zündpunkts 42 beschleunigt der Lenkflugkörper 2 stark und ist somit eher am voraussichtlichen Zielpunkt 8 als zuvor berechnet. Dies führt dazu, dass sich der Zielpunkt 8 in Richtung auf das Ziel 12 verschiebt, wie in Fig. 4 durch den neuen Zielpunkt 8a angedeutet ist, da das Ziel 12 zu dem früheren Zeitpunkt noch nicht so weit geflogen ist. Dies wird vom Prozessmittel 24 erst eine Weile nach dem Durchfliegen des Zündpunkts 42 bemerkt werden, nämlich durch die höhere erreichte Geschwindigkeit und die dadurch bewirkte Korrektur der Berechnung des Zielpunkts 8a. Entsprechend ist eine starke Kurskorrektur, in Fig. 4 durch den langen Pfeil 44 angedeutet, nötig, um den neuen Zielpunkt 8a zu erreichen. Das hierdurch notwendige gegebenenfalls starke Lenkmanöver schränkt die Manöverfähigkeit stark ein, da ein erheblicher Teil der Manöverfähigkeit zur Durchführung des Kurskorrektur-Lenkmanövers verwendet werden muss, um zum neuen Zielpunkt 8a zu gelangen.

Es ist daher nachteilig, wenn das Prozessmittel 24 vom Starten der zweiten Triebwerksstufe überrascht wird. Dieser Nachteil tritt auch bei anderen Navigationsarten ein, beispielsweise der Proportionalnavigation. Nach dem Zünden der zweiten Triebwerksstufe und der dadurch bewirkten Beschleunigung des Lenkflugkörpers 2 wandert das durch den Suchkopf 28 anvisierte Ziel 12 aus dem Kollisionskurs aus, da die Sichtlinie zum Ziel 12 dreht. Entsprechend muss die Richtung des Lenkflugkörpers 2 nachkorrigiert werden, wobei die Korrektur mit zunehmender Flugkörpergeschwindigkeit immer weiter fortgeführt werden muss, da der in diesem Fall nicht berechnete sondern nur anvisierte neue Zielpunkt 8a mit zunehmender Flugkörpergeschwindigkeit immer weiter in Richtung des Ziels 12 verschoben werden muss, sodass ein permanenter Lenkaufwand entsteht, der die Manöverfähigkeit herabsetzt. Zwar kann dieser Lenkaufwand bei einem Anflug auf nicht manövrierende Ziele noch problemlos geleistet werden, da die Einschränkungen der Proportionalnavigation oder oben beschriebenen Fehlpunktnavigation im zulässigen Rahmen bleiben. Wenn der Lenkflugkörper 2 aufgrund seiner zweiten Stufe mit beispielsweise 12 g beschleunigt, so wirkt sich dies wie ein 12 g Zielmanöver aus und kann bei einer statischen Querbeschleunigungsfähigkeit von mindestens 36 g (Faktor 3) problemlos kompensiert werden. Kommt jedoch ein Fluchtmanöver von beispielsweise 10 g hinzu, so kann bei ungünstiger geometrischer Addition der zusätzlichen Flugkörperbeschleunigung und dem Fluchtmanöver eine Überforderung des Lenkflugkörpers 2 und damit eine unakzeptable Zielablage bzw. Abstand 40 entstehen. Das Resultat sind Löcher im Schussbereich, entstanden durch knappe Vorbeiflüge am Ziel 12.

Das Zünden der zweiten Triebwerksstufe ist ein durch das Prozessmittel 24 gesteuerter lenkfreier Flugprozess, der bei der Berechnung des Zielpunkts 8 entsprechend der Erfindung berücksichtigt wird. Die Lage des Zielpunkts 8 wird vom Prozessmittel 24 unter Zuhilfenahme eines Längsbeschleunigungsprofils des Lenkflugkörpers berechnet, das den Zündzeitpunkt sowie das Schubprofil des Triebwerks 20 bzw. der zweiten Stufe berücksichtigt. Hierzu wird bei der Berechnung der Flugbahneigenschaft, beispielsweise des Fehlpunkts 38 oder eines Kollisionspunkts entsprechend der Proportionalnavigation, der Zündzeitpunkt und das Schubprofil berücksichtigt. Mit Bezug zu dem in den Figuren dargestellten Ausführungsbeispiel ist die Lage des Zielpunkts 8 daher so berechnet, dass sich diese Lage durch das Zünden der zweiten Triebwerksstufe nicht verändert und somit keine Lenkmanöver notwendig sind.

Ein zusätzlicher oder alternativer Flugprozess, der zweckmäßigerweise bei der Berechnung der Flugbahneigenschaft berücksichtigt wird, ist ein Abwurfpunkt 46 der Haube 30. Wenn sich der Lenkflugkörper 2 in genügendem Maße an das Ziel angenähert hat, wird die Haube 30 abgeworfen, sodass der Suchkopf 28 durch den Dom 32 Sicht auf das Ziel 12 erhält. Hierdurch wird jedoch der Luftwiderstand des Lenkflugkörpers 2 deutlich erhöht und der Lenkflugkörper 2 wird infolgedessen negativ beschleunigt, also verzögert. Je früher daher der Abwurfpunkt 46 liegt, desto später erreicht der Lenkflugkörper 2 den Zielpunkt 8, der infolgedessen immer weiter in Flugrichtung des Ziels 12 wandert. Analog zur Berücksichtigung des Zündpunkts 42 und des Schubprofils bewirkt die Berücksichtigung des Abwurfpunkts 46 und der damit verbundenen erhöhten Luftreibung, dass der Zielpunkt 8 auch nach Durchfliegen des Abwurfpunkts 46 nicht wandert und hierdurch keine zusätzlichen Lenkmanöver notwendig sind.

Bei modernen Lenkflugkörpern 2 ist das Triebwerk 20 in seinem Schub einstellbar, sodass das Prozessmittel 24 ein Schubprofil über einen Zeitraum kontinuierlich einstellen kann. Bei der Ermittlung eines vorteilhaften Schubprofils gehen die Entfernung und Richtung des Ziels 12, die Art der Zielbekämpfung und andere Parameter ein. Bei der Berechnung der Flugbahneigenschaft wird somit von der rein ballistischen Flugbahn 4 abgewichen, da das einstellbare Schubprofil kontinuierlich mit berücksichtigt wird. Die Berücksichtigung kann geschehen, indem zumindest eine zeitkontinuierliche Variable des Schubprofils, beispielsweise der Schub in Abhängigkeit von der Zeit, in die Berechnung der Flugbahneigenschaft eingeht. Ebenfalls möglich ist eine Beschleunigung in Abhängigkeit der Zeit oder eine andere zeitabhängige Größe.

Unabhängig von der Art der Navigation, also Proportionalnavigation, Fehlpunktnavigation oder einer anderen Navigationsart, wird ein Lenkflugkörper 2 üblicherweise durch Lenkmanöver auf das Ziel gesteuert. Alternativ oder zweckmäßigerweise unterstützend ist es vorteilhaft, den Schub des Triebwerks 20 zur Lenkung des Lenkflugkörpers 2 zum Zielpunkt 8 zu verwenden. Bei dem in Fig. 3 dargestellten Beispiel liegt beispielsweise der Zielpunkt 8 näher am Ziel 12, als der Fehlpunkt 38. Beim obigen Beispiel wurde der Abstand 40 durch ein Lenkmanöver entsprechend des Pfeils 48 ausgeglichen. Zusätzlich oder alternativ zum Lenkmanöver kann der Abstand 40 eliminiert werden, indem der Lenkflugkörper 2 verzögert. Durch das Abbremsen wird der Fehlpunkt 38 zu einem späteren Zeitpunkt erreicht, das Ziel 12 fliegt länger, sodass der Zielpunkt 8 in den Fehlpunkt 38 oder in dessen Nähe wandert. Auf diese Weise kann auf Lenkmanöver verzichtet werden oder diese können reduziert werden, sodass die Manöverfähigkeit des Lenkflugkörpers 2 im Endanflug auf das Ziel 12 erhöht ist.

Zusammengefasst berechnet das Prozessmittel 24 ein Längsbeschleunigungsprofil, mit dem das Zielkriterium, beispielsweise eine Verringerung des Abstands zwischen Fehlpunkt 38 und Zielpunkt 8, in einer vorgegebenen Weise - nämlich die Reduzierung des Abstands - erfüllt wird. Entsprechend wird der Flug des Lenkflugkörpers 2 auf dem berechneten Längsbeschleunigungsprofil gesteuert, also so, dass der Lenkflugkörper das Längsbeschleunigungsprofil erfährt. Sind dennoch Lenkmanöver notwendig, so geschehen diese unter Berücksichtigung des Längsbeschleunigungsprofils.

Ein weiteres oder alternatives mögliches Zielkriterium ist eine Ausrichtung eines Angriffswinkels des Lenkflugkörpers im Zielpunkt 8. Üblicherweise begegnen sich zwei Raketen mit einer extrem hohen Geschwindigkeit. Treffen diese beispielsweise rechtwinklig aufeinander, so muss die Zündung der Wirkladung 22 sehr zeitgenau gesteuert werden, um das Ziel 12 tatsächlich zu treffen. Weit geringere Anforderungen an die zeitgenaue Zündung der Wirkladung 22 werden gestellt, wenn sich die beiden Raketen entgegenkommen, also aufeinander zufliegen. Die Wirkladung 22 kann früh gezündet werden, sodass beispielsweise eine Splitterwolke auf das Ziel 12 zu bewegt wird und das Ziel 12 trifft, unabhängig von einem etwas früheren oder späteren Zündzeitpunkt der Wirkladung 22. In einem solchen Fall ist somit ein möglichst stumpfer Angriffswinkel vorteilhaft. Als Angriffswinkel kann in diesem Zusammenhang ein Winkel der Flugbahn 4 des Lenkflugkörpers 2 mit einer Bewegungsrichtung des Ziels 12 verstanden werden.

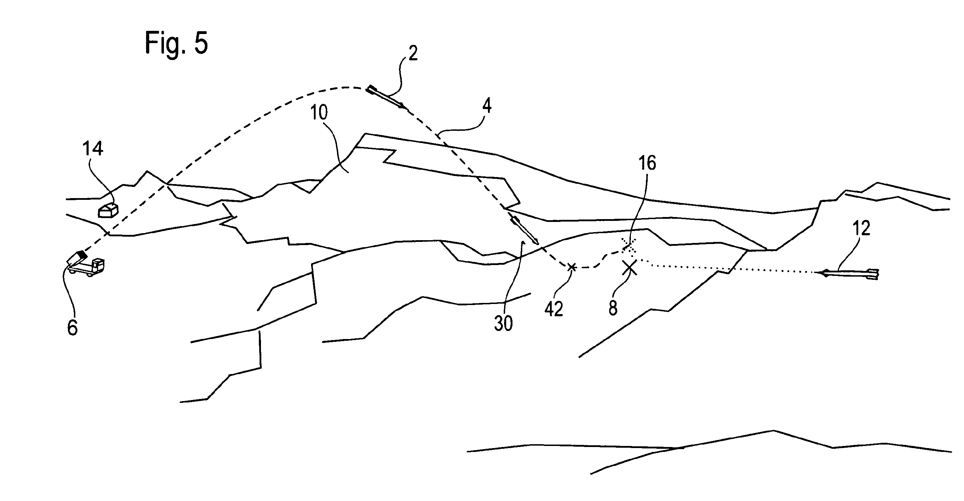

Das Beispiel aus Fig. 5 verdeutlicht diesen Prozess. Die Flugbahn 4 ist so geführt, dass sich der Lenkflugkörper 2 und das Ziel 12 in einem Angriffswinkel von 180° treffen, die beiden Raketen somit genau aufeinander zufliegen. Bei der Fehlpunktnavigation wird somit neben dem Abwurf der Haube 30 und dem Zündzeitpunkt 42 auch ein Angriffswinkel von 180° berücksichtigt, wobei zusätzlich eine Länge der Flugbahn 4 berücksichtigt wird, in der der Angriffswinkel eingehalten werden soll, z.B. zumindest 1000 m. Nicht absehbare Fluchtbewegungen, wie in Fig. 5 dargestellt, werden jedoch nicht berücksichtigt.

Da es üblicherweise gewünscht ist, den Zielpunkt 8 möglichst früh zu erreichen, andererseits der Lenkflugkörper 2 den Zielpunkt 8 mit einer möglichst hohen Endgeschwindigkeit erreichen soll zum Erzielen einer hohen Manöverfähigkeit, muss abgewogen werden, ob der Flug des Lenkflugkörpers 2 mit einem anfänglichen hohen Schub erfolgt, wodurch eine Reduzierung der Flugzeit erreicht wird, oder ob die Ressourcen des Triebwerks 20 für eine möglichst hohe Endbeschleunigung zum Erreichen einer hohen Manöverfähigkeit aufgespart werden. Entsprechende Vorgaben können aus einer Eigenschaft des Ziels, seiner Entfernung und Flugrichtung oder einer Kampfsituation erwachsen, die beispielsweise von einer Flugleitzentrale berechnet und an den Lenkflugkörper 2 übermittelt wird. Entsprechend der Vorgaben berechnet das Prozessmittel 24 ein Längsbeschleunigungsprofil oder Schubprofil des Triebwerks 20, das die Vorgaben erfüllt.

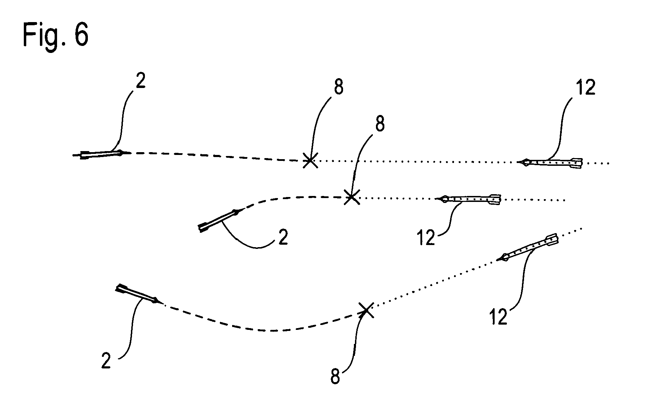

Gerade bei einem Kampf um ein Schiff kann es vorkommen, dass dieses mit mehreren Raketen angegriffen wird. Entsprechend werden mehrere Lenkflugkörper 2 zur Abwehr der mehreren Ziele 12 eingesetzt. Gerade wenn diese Ziele 12 sehr dicht beieinander sind, ist eine Koordination der Manöver der Lenkflugkörper 2 vorteilhaft. Eine solche Situation ist beispielhaft in Fig. 6 dargestellt. Drei Ziele 12 werden mit drei Lenkflugkörpern 2 bekämpft, die die Ziele 12 genau von vorne anfliegen und in den Zielpunkten 8 treffen. Um Fluchtmanöver auszugleichen, ist eine Sicht des Lenkflugkörpers 2 bzw. dessen Suchkopfs 28 auf das entsprechende Ziel 12 notwendig.

Bei der in Fig. 6 beispielhaft dargestellten Situation ist der Abstand zwischen dem mittleren Lenkflugkörper 2 und dem mittleren Ziel 12 am geringsten. Entsprechend treffen diese beiden Raketen als erstes aufeinander. Die hierbei entstehende Explosionswolke ist so groß, dass der in Fig. 6 oberhalb gezeichnete Lenkflugkörper 12 durch die Explosionswolke verdeckt wird und somit ein vom Lenkflugkörper 2 unentdecktes Fluchtmanöver fliegen kann. Es ist daher vorteilhaft, wenn der mittlere Lenkflugkörper 2 möglichst spät auf sein Ziel 12 trifft, damit die entstehende Explosionswolke das oberhalb gezeichnete Ziel 12 nicht verdeckt.

Zur Koordination solcher Manöver stehen die Lenkflugkörper 2 in einem Funkkontakt zueinander und teilen beispielsweise die Zielzeitpunkte, also diejenigen Zeitpunkte, bei denen sie ihren jeweiligen Zielpunkt 8 erreichen, den anderen Lenkflugkörpern 2 mit. Das Prozessmittel 24 des mittleren Lenkflugkörpers 2 erkennt hierdurch, dass der oben dargestellte Lenkflugkörper 2 relativ spät seinen Zielpunkt 8 erreicht. Entsprechend wird das Beschleunigungsprofil des mittleren Lenkflugkörpers 2 durch dessen Prozessmittel 24 so verändert, dass der mittlere Lenkflugkörper 2 später auf seinen Zielpunkt 8 trifft, um eine Verdeckung des oberen Ziels 12 durch die Explosionswolke zu verhindern.

Zusammengefasst wird somit als Zielkriterium ein Zielzeitpunkt gewählt, zu dem der Lenkflugkörper 2 sein Ziel 12 bzw. den Zielpunkt 8 erreichen soll. Dieser Zielzeitpunkt ist abhängig von dem Zielzeitpunkt, zu dem ein benachbart fliegender Lenkflugkörper 2 seinen Zielpunkt 8 erreicht. Beide Zielzeitpunkte liegen innerhalb oder außerhalb einer vorgegebenen Zeitspanne, die von der Lage der Zielpunkte 8 zueinander abhängig sein kann. Je weiter die Zielpunkte 8 voneinander entfernt sind, desto länger braucht es, bis eine Explosionswolke sich ausbreitet und ein benachbartes Ziel 12 verdeckt. Da die Lage der Zielpunkte 8 zueinander bekannt ist und diese per drahtloser Kommunikation der Lenkflugkörper 2 untereinander ausgetauscht werden, kann von dem Prozessmittel 24 des mittleren Flugkörpers 2 die Zeitspanne berechnet werden und das Beschleunigungsprofil bzw. der Aufschlagzeitpunkt entsprechend eingestellt werden.

### Bezugszeichenliste

- 2: Lenkflugkörper
- 4: Flugbahn
- 4a: Flugbahn
- 6: Startgerät
- 8: Zielpunkt
- 8a: Zielpunkt
- 10: Landschaft
- 12: Ziel
- 14: Feuerleitstelle
- 16: Aufschlagpunkt
- 18: Trajektorie
- 20: Triebwerk
- 22: Wirkladung
- 24: Prozessmittel
- 26: Datenspeicher
- 28: Suchkopf
- 30: Haube
- 32: Dom
- 34: Aktuator
- 36: Leitflügel
- 38: Fehlpunkt
- 40: Abstand
- 42: Zündzeitpunkt
- 44: Pfeile
- 46: Abwurfpunkt
- 48: Pfeil

## Patentansprüche

1. Verfahren zum Steuern eines durch ein Triebwerk angetriebenen Lenkflugkörpers (2), bei dem ein Prozessmittel (24) des Lenkflugkörpers (2) während des Flugs eine Flugbahneigenschaft einer Flugbahn (4) zu einem Zielpunkt (8) berechnet und den Flug des Lenkflugkörpers (2) in Abhängigkeit von der Flugbahneigenschaft steuert,
**dadurch gekennzeichnet,**
**dass** bei der Berechnung der Flugbahneigenschaft die Fluggeschwindigkeit des Lenkflugkörpers (2) beeinflussende und durch das Prozessmittel (24) gesteuerte lenkfreie Flugprozesse berücksichtigt werden.

2. Verfahren nach Anspruch 1,
**dadurch gekennzeichnet,**
**dass** das Prozessmittel (24) als Flugbahneigenschaft einen Fehlpunkt (38), an dem die Flugbahn (4) den geringsten Abstand zu einem bekannten Zielpunkt (8) hat, berechnet und den Flug des Lenkflugkörpers (2) in Abhängigkeit von der Lage des Fehlpunkts (38) relativ zum Zielpunkt (8) steuert.

3. Verfahren nach Anspruch 1 oder 2,
**dadurch gekennzeichnet,**
**dass** als Flugprozess ein vom Prozessmittel (24) einstellbares Schubprofil des Triebwerks (20) des Lenkflugkörpers (2) berücksichtigt wird.

4. Verfahren nach einem der vorhergehenden Ansprüche,
**dadurch gekennzeichnet,**
**dass** als Flugprozess ein Zündzeitpunkt einer zweiten Triebwerksstufe berücksichtigt wird.

5. Verfahren nach einem der vorhergehenden Ansprüche,
**dadurch gekennzeichnet,**
**dass** der Lenkflugkörper ein Triebwerk (20) aufweist, dessen Schubprofil über einen Zeitraum einstellbar ist, und zumindest eine zeitkontinuierliche Variable des Schubprofils in die Berechnung der Flugbahneigenschaft eingeht.

6. Verfahren nach einem der vorhergehenden Ansprüche,
**dadurch gekennzeichnet,**
**dass** als Flugprozess einen Abwurf eines Gegenstands vom Lenkflugkörper (2) berücksichtigt wird.

7. Verfahren nach einem der vorhergehenden Ansprüche,
**dadurch gekennzeichnet,**
**dass** das Prozessmittel (24) ein Längsbeschleunigungsprofil berechnet, mit dem ein Zielkriterium in vorgegebener Weise erfüllt wird.

8. Verfahren nach Anspruch 7,
**dadurch gekennzeichnet,**
**dass** das Zielkriterium eine Minimierung des Abstands (40) zwischen Fehlpunkt (38) und Zielpunkt (8) ist.

9. Verfahren nach Anspruch 7 oder 8,
**dadurch gekennzeichnet,**
**dass** das Zielkriterium ein Angriffswinkel des Lenkflugkörpers (2) im Zielpunkt (8) ist.

10. Verfahren nach Anspruch 9,
**dadurch gekennzeichnet,**
**dass** das Längsbeschleunigungsprofil so berechnet ist, dass der Angriffswinkel zumindest eine vorbestimmte Zeitdauer vor Erreichen des Zielpunkts (8) erreicht ist.

11. Verfahren nach einem der Ansprüche 7 bis 10,
**dadurch gekennzeichnet,**
**dass** das Zielkriterium ein Zielzeitpunkt ist, zu dem der Lenkflugkörper (2) das Ziel (12) erreicht.

12. Verfahren nach Anspruch 11,
**dadurch gekennzeichnet,**
**dass** der Zielzeitpunkt abhängig von einem Zielzeitpunkt ist, zu dem ein benachbart fliegender Lenkflugkörper (2) seinen Zielpunkt (8) erreicht.

13. Verfahren nach Anspruch 12,
**dadurch gekennzeichnet,**
**dass** die beiden Lenkflugkörper (8) ihre Zielzeitpunkte austauschen.

14. Lenkflugkörper (2) mit einem Triebwerk (20) und einem Prozessmittel (24), das zum Steuern eines Flugs des Lenkflugkörpers (2) in der Weise vorbereitet ist, dass das Prozessmittel (24) während des Flugs eine Flugbahneigenschaft zu einem Zielpunkt (8) berechnet und den Flug des Lenkflugkörpers (2) in Abhängigkeit von der Flugbahneigenschaft steuert,
**dadurch gekennzeichnet,**
**dass** das Prozessmittel (24) dazu vorbereitet ist, bei der Berechnung der Flugbahneigenschaft die Fluggeschwindigkeit des Lenkflugkörpers (2) beeinflussende und durch das Prozessmittel (24) gesteuerte lenkfreie Flugprozesse zu berücksichtigen.
